# EUROPEAN PATENT SPECIFICATION

(11) **EP 3 130 265 B1**
(45) Date of publication and mention of the grant of the patent: **11.09.2019**
(21) Application number: 16181693.9
(22) Date of filing: 28.07.2016
(51) Int. Cl.: A47J 43/07, A47J 43/08

(54) **SECURITY LOCKING SYSTEM FOR A KITCHEN DEVICE**
VERRIEGELUNGSSYSTEM FÜR EIN HAUSHALTSGERÄT
SYSTÈME DE VERROUILLAGE

(30) Priority: 03.08.2015 SI 201500183
(43) Date of publication of application: 15.02.2017
(73) Proprietor: BSH Hausgeräte GmbH, 81739 München (DE)
(72) Inventor: Enci, David, 3331 Nazarje (SI); Potocnik, David, 3214 Zrece (SI); Berzelak, Matej, 3333 Ljubno (SI); Pesec, Jurij, 3301 Petrovce (SI)

(56) References cited:
- EP-B1- 2 432 356
- DE-A1- 3 545 226

## Description

### BACKGROUND OF THE INVENTION

The present invention is relating to the field of safety measures for operation and handling of the tools for processing food in kitchen devices.

### PRIOR ART

From the current state of the art, a coupling device for a kitchen device is described in EP 2 432 356 B1, that is adapted for coupling to a drive unit of the kitchen appliance in order to drive a tool in a rotary manner around a rotation axis, wherein the coupling device has a circumferential outer surface comprising at least one receiving region for receiving the tool and wherein the at least one receiving region has a first engagement region and a second engagement region such that the tool can be received along the rotation axis in a manner substantially free of play and irrespective of the direction of rotation, characterized in that the first engagement region has a drive edge and the second engagement region has a kickback edge, wherein the drive edge and the kickback edge run antiparallel to each other.

However, during processing of food it often appears that some pieces of the processed food are captured beneath knife blades, especially when processing solid food ingredients such as ice, frozen strawberries and carrots. Therefore lifting force begins to act on the knife blades and pushes the knife upwards i.e. from its processing position. Consequently extreme shock load appears causing knife bouncing which prevents food processing, which can result in damage to the kitchen device and/or injuries to the user. A further relevant prior art document in the same technical area is DE 35 45 226.

### OBJECT UNDERLYING THE INVENTION

The object underlying the present invention is to provide an improved security locking system for a kitchen device for the prevention of knife lifting and bouncing occurring when processing solid food ingredients as well as to provide a simpler installation of the knife onto the holder.

### SOLUTION ACCORDING TO THE INVENTION

In order to achieve the object underlying the invention, the present invention provides a security locking mechanism as defined in claim 1. As a second aspect of the invention, a kithen device is provided as defined in claim 8. Advantageous embodiments that can be implemented by themselves or in combination are described in dependent claims.

The solution according to the invention is achieved with a security locking system for a kitchen device that is adapted for coupling to a drive unit of the kitchen appliance in order to drive a tool in a rotary manner around a rotation axis, wherein the coupling device has a circumferential outer surface comprising at least one receiving region for receiving the tool and wherein the at least one receiving region has a first engagement region and a second engagement region such that the tool can be received along the rotation axis in a manner substantially free of play and irrespective of the direction of rotation, wherein the first engagement region has a drive edge and the second engagement region has a kickback edge, wherein the drive edge and the kickback edge run antiparallel to each other, wherein the security locking system comprises one or more blocking regions positioned on the circumferential outer surface of the coupling device directly above, preferably in contact with, the upper edge of the tool in operating position in order to prevent the tool to be disengaged from the coupling device when high forces arise during operation as a result of the processing of hard food ingredients, such as ice, frozen strawberries and carrots. Such a positioning of the blocking regions results in the fixation of the tool in the operating position even when the food ingredients that are being processed are hard and are therefore producing high forces that are in part directed axially upwards toward the lid of the kitchen appliance and can, without implementation of said blocking regions cause displacement of the processing tool.

### EMBODIMENTS OF THE INVENTION

In a preferred embodiment, the one or more blocking regions are designed as protrusions from the circumferential outer surface of the coupling device, preferably made of the same material. It is preferential to produce the blocking region as an integral part of the coupling device in order to minimize costs.

In an advantageous solution, the blocking regions are all positioned at the same height on the circumference of the outer surface of the coupling device in close proximity of or in contact with the upper edge of the tool. Several blocking regions may be positioned around the circumference of the coupling device. It is reasonable to position these blocking regions, which need not be of the same size, in such a way, that their contact region at the bottom of each blocking region corresponds closely, as to the height at which it is placed on the circumference of the coupling device, to the position of the upper edge of the tool when it is in the operating position. In such an arrangement, the blocking regions collectively provide several gliding points or surfaces spaced around the coupling device circumference that counteract the undesired axial forces resulting from the processed food ingredients that might otherwise displace the tool.

Specifically, the one or more blocking regions comprise a gliding region in the region for contact with the upper edge of the tool. In an arrangement of the blocking regions as described in the previous paragraph,, the blocking regions collectively provide several gliding points or surfaces spaced around the coupling device circumference that counteract the undesired axial forces resulting from the processed food ingredients that might otherwise displace the tool.

Preferably, the tool additionally comprises a mounting slope protruding from its inner circumference which is designed to engage the top portion of a corresponding blocking region or regions, said mounting slope being inclined by 5 to 30 degrees in regard to the plane perpendicular to rotation axis. Such an inclination ensures that the tool slides to its correct operating position regardless of the initial rotation in which the user starts to mount the tool onto the coupling device. An inclination should be large enough to allow the tool to automatically slide into its position without the need for a user intervention. An exact slope required for that depends on the embodiment of the kitchen device, but generally falls between 5 and 30 degrees.

Further, it is conceivable that said mounting slope acts as a positioning means which allows the tool to be mounted onto the coupling device only in a specific rotational position which allows the desired positioning for secure locking to the security locking system, whereby the specific rotational position of the tool results from rotation of the tool through sliding on the mounting slope. As described in the previous paragraph, an inclination of the mounting slope ensures that the tool slides to its correct operating position regardless of the initial rotation in which the user starts to mount the tool onto the coupling device. It is also preferably designed in a way that only allows the tool to fall into place in one or a few - in case of rotational symmetry of the blocking segments - predetermined positions that ensure safe operation of the kitchen device.

In the preferred embodiment, the mounting slope is designed as a straight line feature inclined by the said 5 to 30 degrees in regard to the plane perpendicular to rotation axis. While it may be preferential to design the mounting slope as a straight feature with a constant inclination, this in no way excludes other shapes of the mounting slope including slopes, waves and stepwise increasing/decreasing inclinations of the mounting slope. Some of these solutions may be preferable in some embodiment.

### BRIEF DESCRIPTION OF THE DRAWINGS

The invention is explained in more detail below on the basis of an exemplary embodiment and with reference to schematic drawings in which:
Fig. 1 shows a security locking system for food processing tool and coupling device;
Fig. 2 shows a schematic of a kitchen device assembled for processing;
Fig. 3 shows the tool in the operating position (left) and in an undesired/detached position which is a result of a shock load (right);
Fig. 4 shows the position of the blocking region on the coupling device in regard to the tool before (left) and after (right) mounting of the tool;
Fig. 5 shows blocking region features on the coupling device (left) and on the plastic part of the tool (right).

### DETAILED DESCRIPTION OF THE INVENTION

Advantageous embodiments and developments which can be used individually or in combination with one another are the subject matter of the dependent claims.

Features described in the claims and in the description can have relevance tot he presented invention either by themselves or in any combination thereof.

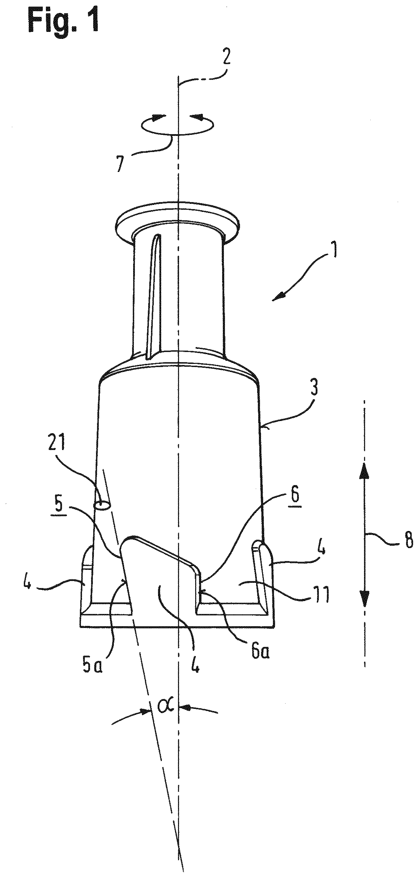

Fig. 1 shows a schematic of a coupling device 1 in detail where the security locking system is presented in detail. The kitchen device 13 is adapted to drive a tool 10 in a rotary manner around a rotation axis 2. The rotation 7 of the tool 10, connected to a coupling device 1 results in the processing of the food ingredients. The coupling device 1 has a circumferential outer surface 3 comprising at least one receiving region 4 for receiving the tool 10. The receiving region 4 further comprises a first engagement region 5 and a second engagement region 6 such that the tool 10 can be received along the rotation axis 2 through downward translation 8 in a manner substantially free of play and irrespective of the direction of rotation 7. Additionally, the first engagement region 5 has a drive edge 5a and the second engagement region 6 has a kickback edge 6a, wherein the drive edge 5a and the kickback edge 6a run antiparallel to each other. Finally, the coupling device 1 also comprises at least one blocking segment 21, which is designed with the mounting slope 23 on the inner circumference of the tool 10 in order to achieve easy and correct positioning of the tool 10 onto the coupling device 1.

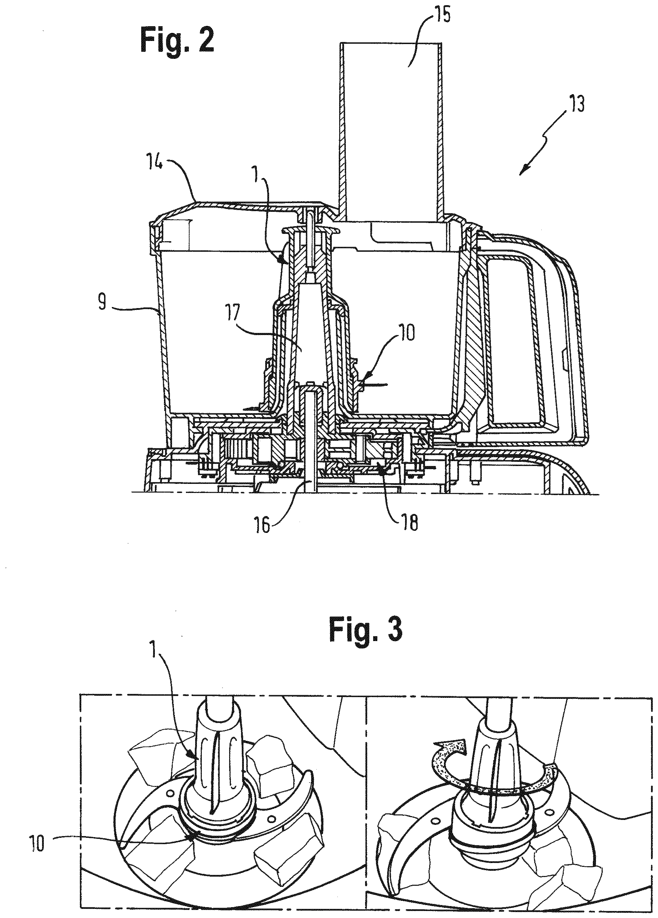

Fig. 2 depicts the kitchen device 13 assembled for operation. Positions of the coupling device 1 and processing tool 10 can be seen.

Fig. 3 shows the tool 10 in the operating position (left) and in an undesired/detached position which is a result of a shock load (right) when there is no blocking region 21 present. During processing of the food ingredients, it often appears that some pieces of the processed food are captured beneath the tool, e.g. blades, especially when processing solid food ingredients such as ice, frozen strawberries and carrots. Therefore lifting forces begin to act on the tool 10 and push the tool 10 upwards i.e. from its processing position. Consequently extreme shock load appears causing the tool 10 to bounce and/or detach from its operating position which impedes food processing. Fig. 3 is showing an example of extreme shock load during processing of ice where tool 10 bouncing effect can be noted. If the blocking region or regions 21 are present on the circumference of the coupling device 21 - positioned right above the upper edge 22 of the tool 10 in operating position so as to prevent the undesired displacement in the upward direction 8 - the tool 10 is much more secure during processing of said hard food ingredients.

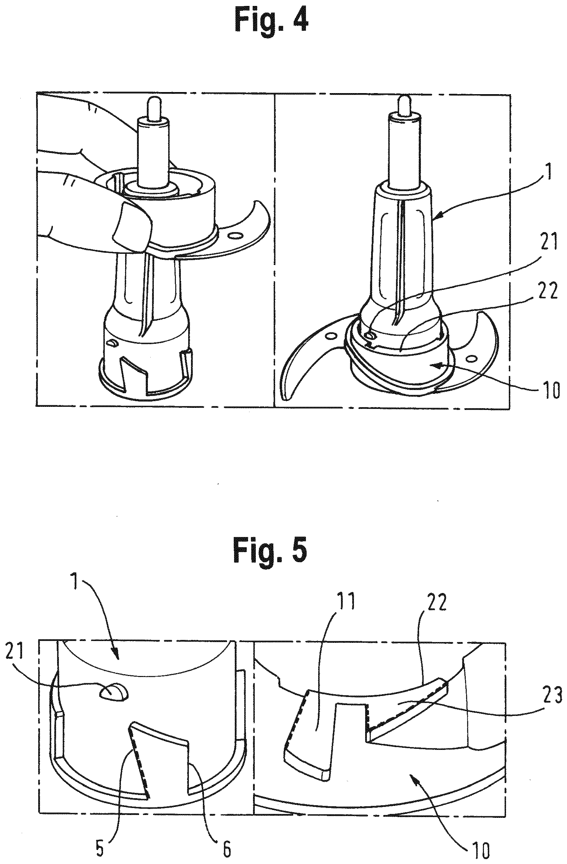

Fig. 4 shows the position of the blocking region 21 on the coupling device 1 in regard to the tool 10 before (left) and after (right) mounting of the tool 10. The coupling device 1 includes one or more blocking regions 21 which provide a supporting function when lifting force begins to act on the tool 10. In this manner undesired lifting and uncontrolled bouncing of the tool 10 are prevented.

Finally, Fig. 5 shows the interaction between the blocking regions 21 of the coupling device (right) and the mounting slope 23 of the tool 10 (left). The blocking regions 21 themselves do not resolve tool 10 displacement issues completely. In some situations when the tool 10 is freely dropped on the coupling device 1 it often does not lock directly into the operating position as shown in Fig. 4. If the blocking segments 21 are not properly designed, the tool 10 might get stuck on top of the blocking segments 21 and/or first 5 and second 6 engagement regions of the coupling device 1. In case the user fails to detect improper tool 10 position and starts the processing of the food, tool 10 displacement may occur which may present danger to the user or result in the damage to the kitchen device 13. Therefore the tool 10 and the coupling device 1 should be designed in such manner that the user is able to easily install the tool 10 without paying special attention to the proper rotational positioning of the tool 10 in relation to the coupling device 1.

The presented tool 10 and coupling device 1 contain special locking mechanism features to prevent any undesirable mounting position of the tool 10 during mounting and processing operations. To prevent axial movement of the tool 10, the engagement regions (5,6) on the coupling device 1 have negative angle-shaped blocking surface. The tool 10 also has engagement region 12 with an opposite slope than the coupling device 1. Together, these slopes prevent the displacement of the tool 10 when processing of softer food ingredients. To prevent clamping of the tool 10 on the blocking region 21 of the coupling device 1, the tool 10 has also slope-shaped mounting slopes 23 that ensure easy sliding of the tool 10 directly into the processing position.

Blocking regions 21 on the coupling device 1 are shaped and distanced in regard to first 5 and second 6 engagement regions so as to enable easy slip of the tool 10 into the final operating position. The tool 10 locks into the operating position even if it is thrown from a height equal to the height of the coupling device 1 and in this manner a user friendly handling is provided.

### Feature list

- 1: Coupling device
- 2: Rotation axis
- 3: Circumferential outer surface
- 4: Receiving region
- 5: First engagement region
- 5a: Drive edge
- 6: Second engagement region
- 6a: Kickback edge
- 7: Rotation
- 8: Direction of mounting/dismounting the tool
- 9: Processing vessel
- 10: Tool
- 11: Adjustment region
- 12: Engagement region on the tool
- 13: Kitchen device
- 14: Lid
- 15: Filling opening
- 16: Drive shaft
- 17: Adaptor
- 18: Planetary gears
- 21: Blocking region
- 22: Upper edge of the tool
- 23: Mounting slope

## Claims

1. A security locking system for a kitchen device (13) that is adapted for coupling to a drive unit of the kitchen appliance (13) in order to drive a tool (10) in a rotary manner around a rotation axis (2), wherein the coupling device (1) has a circumferential outer surface (3) comprising at least one receiving region (4) for receiving the tool (10) and wherein the at least one receiving region (4) has a first engagement region (5) and a second engagement region (6) such that the tool (10) can be received along the rotation axis (2) in a manner substantially free of play and irrespective of the direction of rotation (7), wherein the first engagement region (5) has a drive edge (5a) and the second engagement region (6) has a kickback edge (6a), wherein the drive edge (5a) and the kickback edge (6a) run antiparallel to each other, **characterized in that** the security locking system comprises one or more blocking regions (21) positioned on the circumferential outer surface (3) of the coupling device (1) directly above, preferably in contact with, the upper edge (22) of the tool (10) in operating position in order to prevent the tool (10) to be disengaged from the coupling device (1) when high forces arise during operation as a result of the processing of hard food ingredients, such as ice, frozen strawberries and carrots.

2. A security locking system according to claim 1, **characterized in that** the one or more blocking regions (21) are designed as protrusions from the circumferential outer surface (3) of the coupling device (1), preferably made of the same material.

3. A security locking system according to claims 1 or 2, **characterized in that** the blocking regions (21) are all positioned at the same height on the circumference of the outer surface (3) of the coupling device (1) in close proximity of or in contact with the upper edge (22) of the tool (10).

4. A security locking system according to any of the previous claims, **characterized in that** the one or more blocking regions (21) comprise a gliding region in the region for contact with the upper edge (22) of the tool (10).

5. A security locking system according to any of the previous claims, **characterized in that** the tool (10) additionally comprises a mounting slope (23) protruding from its inner circumference which is designed to engage the top portion a corresponding blocking region or regions (21), said mounting slope (23) being inclined by 5 to 30 degrees in regard to the plane perpendicular to rotation axis (2).

6. A security locking system according to claim 5, **characterized in that** said mounting slope (23) acts as a positioning means which allows the tool (10) to be mounted onto the coupling device (10) only in a specific rotational position which allows the desired positioning for secure locking to the security locking system, whereby the specific rotational position of the tool (10) results from rotation of the tool (10) through sliding on the mounting slope (23).

7. A security locking system according to claims 5 or 6, **characterized in that** the mounting slope (23) is designed as a straight line feature inclined by the said 5 to 30 degrees in regard to the plane perpendicular to rotation axis (2).

8. A kitchen device comprising a security locking system according to one of the claims 1 to 7.

## Patentansprüche

1. Sicherheitsverschlusssystem für eine Küchenvorrichtung (13), das so angepasst ist, dass es sich mit einer Antriebseinheit des Küchengeräts (13) verbinden lässt, damit ein Werkzeug (10) auf rotierende Weise um eine Rotationsachse (2) herum angetrieben wird, wobei die Verbindungsvorrichtung (1) eine umlaufende Außenfläche (3) aufweist, die mindestens einen Aufnahmebereich (4) zum Aufnehmen des Werkzeugs (10) umfasst, und wobei der mindestens eine Aufnahmebereich (4) einen ersten Eingriffsbereich (5) und einen zweiten Eingriffsbereich (6) aufweist, so dass das Werkzeug (10) entlang der Rotationsachse (2) unabhängig von der Rotationsrichtung (7) auf eine im Wesentlichen spielfreie Weise aufgenommen werden kann, wobei der erste Eingriffsbereich (5) eine Antriebskante (5a) und der zweite Eingriffsbereich (6) eine Rückschlagkante (6a) aufweist, wobei die Antriebskante (5a) und die Rückschlagkante (6a) antiparallel zueinander verlaufen, **dadurch gekennzeichnet, dass** das Sicherheitsverschlusssystem einen oder mehrere Blockierbereiche (21) umfasst, die an der umlaufenden Außenfläche (3) der Verbindungsvorrichtung (1) direkt über der oberen Kante (22) des Werkzeugs (10) in Betriebsposition, vorzugsweise in Kontakt damit positioniert sind und so verhindern, dass sich das Werkzeug (10) von der Verbindungsvorrichtung (1) löst, wenn beim Betrieb aufgrund des Verarbeitens von harten Lebensmittelzutaten wie Eis, gefrorenen Erdbeeren und Möhren starke Kräfte auftreten.

2. Sicherheitsverschlusssystem nach Anspruch 1, **dadurch gekennzeichnet, dass** der eine oder die mehreren Blockierbereiche (21) als Vorsprünge an der umlaufenden Außenfläche (3) der Verbindungsvorrichtung (1) ausgelegt und vorzugsweise aus dem gleichen Material hergestellt sind.

3. Sicherheitsverschlusssystem nach Anspruch 1 oder 2, **dadurch gekennzeichnet, dass** die Blockierbereiche (21) alle in unmittelbarer Nähe von oder in Kontakt mit der oberen Kante (22) des Werkzeugs (10) in der gleichen Höhe am Umfang der Außenfläche (3) der Verbindungsvorrichtung (1) positioniert sind.

4. Sicherheitsverschlusssystem nach einem der vorhergehenden Ansprüche, **dadurch gekennzeichnet, dass** der eine oder die mehreren Blockierbereiche (21) im Bereich des Kontakts mit der oberen Kante (22) des Werkzeugs (10) einen Gleitbereich umfassen.

5. Sicherheitsverschlusssystem nach einem der vorhergehenden Ansprüche, **dadurch gekennzeichnet, dass** das Werkzeug (10) zusätzlich eine Befestigungsschräge (23) umfasst, die von seinem Innenumfang vorsteht und so ausgelegt ist, dass sie am oberen Abschnitt eines oder mehrerer entsprechender Blockierbereiche (21) anliegt, wobei die Befestigungsschräge (23) in Bezug auf die senkrecht zur Rotationsachse (2) verlaufende Ebene um 5 bis 30 Grad geneigt ist.

6. Sicherheitsverschlusssystem nach Anspruch 5, **dadurch gekennzeichnet, dass** die Befestigungsschräge (23) als Positioniermittel dient, welches ermöglicht, dass das Werkzeug (10) nur in einer bestimmten Rotationsposition an der Verbindungsvorrichtung (10) befestigt werden kann, was die gewünschte Positionierung für ein sicheres Verriegeln mit dem Sicherheitsverschlusssystem ermöglicht, wobei sich die bestimmte Rotationsposition des Werkzeugs (10) aus der Rotation des Werkzeugs (10) durch Gleiten an der Befestigungsschräge (23) ergibt.

7. Sicherheitsverschlusssystem nach den Ansprüchen 5 oder 6, **dadurch gekennzeichnet, dass** die Befestigungsschräge (23) als geradliniges Merkmal ausgelegt ist, das in Bezug auf die senkrecht zur Rotationsachse (2) verlaufende Ebene um die erwähnten 5 bis 30 Grad geneigt ist.

8. Küchenvorrichtung mit einem Sicherheitsverschlusssystem nach einem der Ansprüche 1 bis 7.

## Revendications

1. Système de verrouillage de sécurité pour un appareil de cuisine (13) qui est adapté afin de se coupler à une unité d'entraînement de l'appareil de cuisine (13) pour entraîner un outil (10) d'une façon rotative autour d'un axe de rotation (2), dans lequel le dispositif de couplage (1) possède une surface extérieure circonférentielle (3) comprenant au moins une région réceptrice (4) pour recevoir l'outil (10) et dans lequel l'au moins une région réceptrice (4) possède une première région d'engagement (5) et une deuxième région d'engagement (6) de sorte que l'outil (10) puisse être reçu le long de l'axe de rotation (2) d'une façon essentiellement exempte de jeu et indépendamment du sens de rotation (7), dans lequel la première région d'engagement (5) possède un bord d'entraînement (5a) et la deuxième région d'engagement (6) possède un bord de recul (6a), dans lequel le bord d'entraînement (5a) et le bord de recul (6a) tournent anti-parallèlement l'un à l'autre, **caractérisé en ce que** le système de verrouillage de sécurité comprend une ou plusieurs régions de blocage (21) positionnées sur la surface extérieure circonférentielle (3) du dispositif de couplage (1) directement au-dessus de celle-ci, de préférence en contact avec le bord supérieur (22) de l'outil (10) en position de fonctionnement afin d'empêcher l'outil (10) de se désengager du dispositif de couplage (1) lorsque d'importantes forces sont produites durant le fonctionnement suite au traitement d'ingrédients durs comme le riz, les fraises surgelées et les carottes.

2. Système de verrouillage de sécurité selon la revendication 1, **caractérisé en ce que** la ou les régions de blocage (21) sont conçues sous la forme de protrusions de la surface extérieure circonférentielle (3) du dispositif de couplage (1), de préférence en un matériau identique.

3. Système de verrouillage de sécurité selon les revendications 1 ou 2, **caractérisé en ce que** les régions de blocage (21) sont toutes positionnées à la même hauteur sur la circonférence de la surface extérieure (3) du dispositif de couplage (1) à proximité immédiate ou au contact du bord supérieur (22) de l'outil (10).

4. Système de verrouillage de sécurité selon l'une quelconque des revendications précédentes, **caractérisé en ce que** la ou les régions de blocage (21) comprennent une région de glissement dans la région de contact avec le bord supérieur (22) de l'outil (10).

5. Système de verrouillage de sécurité selon l'une quelconque des revendications précédentes, **caractérisé en ce que** l'outil (10) comprend en outre une pente de montage (23) faisant saillie de sa circonférence intérieure qui est conçue afin de s'engager avec la partie supérieure d'une ou de régions de blocage (21) correspondante(s), ladite pente de montage (23) étant inclinée de 5 à 30 degrés par rapport au plan perpendiculaire à l'axe de rotation (2).

6. Système de verrouillage de sécurité selon la revendication 5, **caractérisé en ce que** ladite pente de montage (23) agit comme un moyen de positionnement qui permet à l'outil (10) d'être monté sur le dispositif de couplage (10) uniquement dans une position de rotation spécifique qui permet le positionnement souhaité pour le verrouillage sécurisé au système de verrouillage de sécurité, la position de rotation spécifique de l'outil (10) résultant de la rotation de l'outil (10) par glissement sur la pente de montage (23).

7. Système de verrouillage de sécurité selon les revendications 5 ou 6, **caractérisé en ce que** la pente de montage (23) est conçue comme un élément droit incliné desdits 5 à 30 degrés par rapport au plan perpendiculaire à l'axe de rotation (2).

8. Appareil de cuisine comprenant un système de verrouillage de sécurité selon l'une des revendications 1 à 7.
